# EUROPEAN PATENT APPLICATION

(11) **EP 3 782 578 A1**
(43) Date of publication of application: **24.02.2021**
(21) Application number: 19781064.1
(22) Date of filing: 19.03.2019
(51) Int. Cl.: A61C 3/12

(54) **BRA**

(30) Priority: 05.04.2018 ES 201830468 U
(71) Applicant: Chic Back, S.L., 28223 Pozuelo de Alarcon Madrid (ES)
(72) Inventor: MARTÍNEZ ALONSO, Natalia, 28223 POZUELO DE ALARCON (Madrid) (ES)
(74) Representative: Herrero & Asociados, S.L.
(86) International application number: PCT/ES2019/070183
(87) International publication number: WO 2019/193223

(57) **Abstract**

Brassiere comprising a pair of cups and a rear fastening band wherein the rear fastening band comprises two end pieces, each of which is attached to one of said cups and an intermediate piece positioned between said end pieces and which is attachable at its ends to said end pieces.

The intermediate piece comprises at its ends some fastening elements complementary to the fastening elements of the end pieces, this intermediate piece that occupies the user's back is made up of fancy elements.

## Description

The present invention relates to a brassiere, in particular to a brassiere for women that allows the back band to be decorated when wearing garments with the back part totally or partially open.

### Background of the invention

Conventional brassieres for women comprise a pair of cups joined at the front by a bridge and joined at the back by an elastic back band.

This elastic back band conventionally comprises a closure element, such as a clasp or the like, which can be opened to put on or take off the brassiere and closed when worn.

When a closed garment is worn, the brassiere is not externally visible, but when a garment is worn with the back fully or partially open, said back band is visible, which is detrimental from an aesthetic point of view, since its function is not decorative, but only functional.

Therefore, an object of the present invention is to provide a brassiere that allows the back band to be decorated when the brassiere is used with a garment with its back partially or fully open.

### Description of the invention

With the brassiere of the invention it is possible to solve the aforementioned drawbacks, presenting other advantages that will be described below.

The brassiere according to the present invention comprises a pair of cups and a rear fastening band, and is characterized in that said rear fastening band comprises:
- two end pieces, each of which is attached to one of said cups; and
- an intermediate piece positioned between said end pieces and which is attachable at its ends to said end pieces.

By virtue of this feature, when wearing a garment whose back is partially or totally open, only this intermediate piece will be seen, which can have any suitable design to make it visually attractive.

Advantageously, said intermediate piece comprises at its ends complementary fastening elements having fastening elements for the end pieces. For example, said fastening elements can be eyelets where hooks are inserted, or any suitable fastening element.

Furthermore, said intermediate piece is advantageously elastic, so that its length is adapted so that the user can wear the brassiere comfortably.

Preferably, the rear fastening band also comprises an additional piece fastened to said intermediate piece. Said additional piece is preferably a decorative element, for example, a jewelry element, a pendant, or any suitable element with a design that makes it visually attractive.

Said additional piece can be attached to the intermediate piece in any suitable way, for example, sewn, glued, or the like.

If desired, said additional piece can be removably attached to said intermediate piece, so that it can be placed and removed as many times as desired, so that the same intermediate piece can be used with more than one additional piece. The removable fastening can be achieved in any suitable way, for example, by Velcro or the like.

In a preferred configuration, the fastening elements of the end pieces of the brassiere are in the projection area of the user's arms below the underarms and therefore outside the user's back.

In another preferred configuration, the intermediate piece placed between the end pieces of the brassiere has hooks on which the straps that surround the user's shoulders can be fastened, these straps being interchangeable and replaceable by straps with fancy ornaments that are overlapped on the user's back.

### Brief description of the drawings

For better understanding what has been stated, some drawings are attached hereto in which, schematically and only as a non-limiting example, a practical case of embodiment is represented.
Figure 1 is a front elevation view of the brassiere in accordance with the present invention;
Figure 2 is a rear elevation view of the brassiere in accordance with the present invention;
Figure 3 is a rear elevation view of an alternative embodiment of the brassiere in accordance with the present invention; and
Figure 4 is a view of the back of a woman wearing a dress with its back partially open and wearing the brassiere in accordance with the present invention.
Figure 5 represents a side view of a brassiere placed on a user to observe its protection on the body of the user.
Figure 6 represents the intermediate piece with the fancy elements and the fastening elements that cover the user's back.

### Description of a preferred embodiment

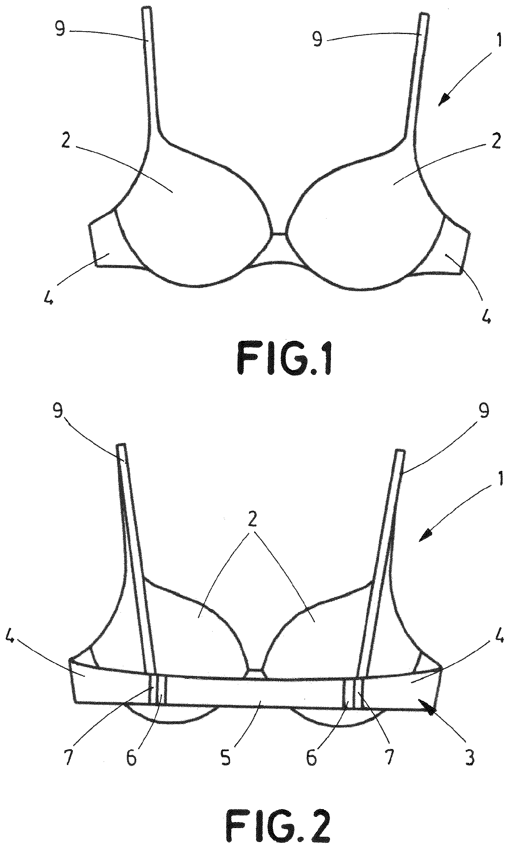

As shown in Figures 1 and 2, the brassiere according to the present invention, generally identified by the reference number (1), comprises a pair of cups (2) and a rear fastening band (3), as it is conventional. Furthermore, although it is not essential, according to the embodiment shown, the brassiere (1) also comprises straps (9), which are also conventional.

According to the present invention, the rear fastening band (3) comprises a pair of end pieces (4) and an intermediate piece 5. Each of said end pieces 4 is attached to one of the cups 2, and said intermediate piece (5) is positioned between the end pieces (4) and is attachable at its ends thereto.

For its coupling, the intermediate piece (5) comprises at its ends some fastening elements (6) that are complementary to some fastening elements (7) of the end pieces (4).

For example, the fastening elements (6) of the intermediate piece (5) can be eyelets, while the fastening elements (7) of the end pieces (4) can be hooks. However, it should be noted that the fastening elements (6), (7) can be any suitable fastening element, such as clasps and the like.

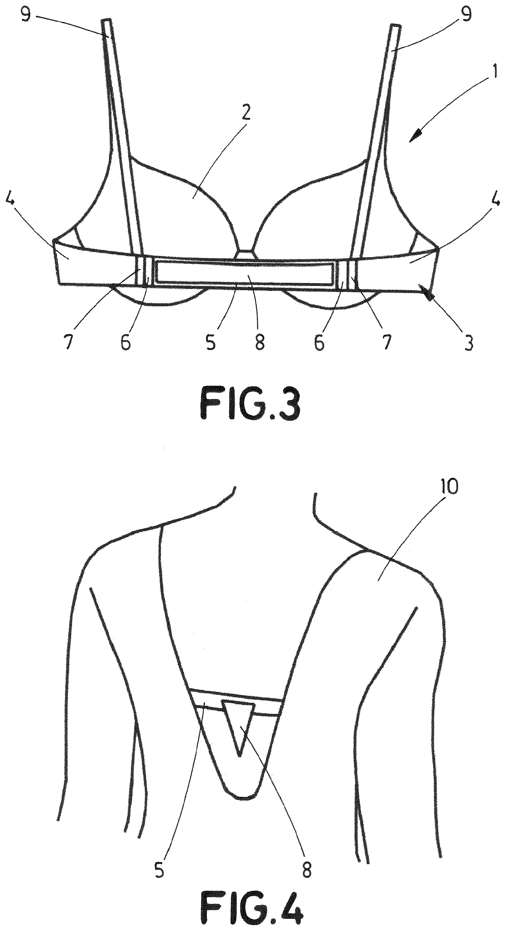

The intermediate piece (5) is an elongated piece of elastic material, to adapt its length to the needs of the user so that the user can wear the brassiere (1) comfortably. Said intermediate piece (5) can have an attractive design, so that the user feels comfortable in the case using it with a garment open in the back, said intermediate piece (5) being seen, as shown in figure 4.

According to the embodiment represented in figure 3, the brassiere (1) according to the present invention may also comprise an additional piece (8) attached to the intermediate piece (7). According to this embodiment, the additional piece (8) has a rectangular shape, but could have any suitable shape.

The additional piece (8) has a solely decorative function, and can be, for example, a jewelry item, a pendant, a frame with a photograph, or any type of suitable decoration.

The additional piece (8) can be attached to the intermediate piece (5) in any suitable way, whether fixed or removable. For example, the additional piece (8) can be sewn or glued to the intermediate piece (5), or it can be fastened by Velcro or similar to be able to place and remove it as many times as desired, being able to use the same intermediate piece (5) with a plurality of additional pieces (8).

Figure 4 represents a rear view of a woman wearing the brassiere (1) according to the present invention with a garment partially open at the back, for example, a dress with a V-neckline in the part of the back.

As can be seen in this figure, only the intermediate piece (5) of the brassiere (1) and the additional piece (8) are visible. In this embodiment, the additional piece (8) is triangular, being, for example, a fancy pendant.

As the intermediate piece (5) and the additional piece (8) have an aesthetically appropriate design, the wearer of the brassiere (1) shall voluntarily show them, with the fastening elements (6), (7) of the intermediate piece (5) and end pieces (4) not being seen. This additional piece (8) consists of a fancy decoration such as sequins, sparkling beads, decorative pendants, etc.

By virtue of the presence of said fastening elements (6), (7), the placement and removal of the brassiere (1) according to the present invention shall be done comfortably in the same way as conventional brassieres.

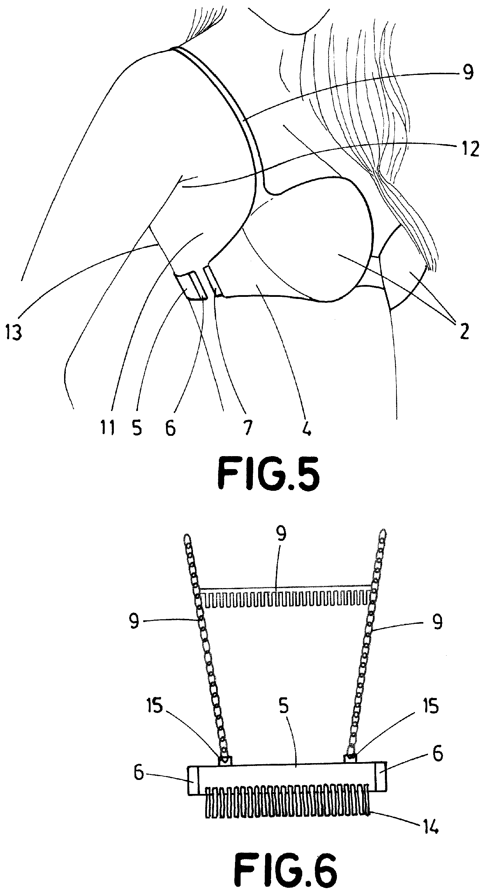

Figure 5 shows a side view of a brassiere placed on a user to observe its protection on the user's body. In this figure 5, we can see the brassiere made up of the cups (2), one of the end pieces (4) and the fastening element (7) remains in the area (11) of vertical projection of the arms below the underarms (12) and therefore outside the user's back (13), which area is occupied by the intermediate piece (5) with the hooks (6) that are attached to the fastening elements (7). With this configuration on the back, only the intermediate piece (5) is visible, which will be made up of fancy ornaments.

Figure 6 shows the intermediate piece (5) with the fancy elements (14) and the fastening elements (6) that cover the user's back. This intermediate piece (5) shall be provided with a few second fastening elements (15) to which the straps (9) shall be attached, which could be the classic brassiere bands or bands with fancy elements similar to or different from the fancy elements (14).

With this configuration, at the back of the users the classic brassiere bands shall not be seen and only fancy elements shall be visible that enhance the vision of the back of those who wear this brassiere.

Although reference has been made to a specific embodiment of the invention, it is clear to a person skilled in the art that the described brassiere is susceptible to numerous variations and modifications, and that all the mentioned details can be replaced by other technically equivalent ones, without departing from the scope of protection defined by the appended claims.

## Claims

1. Brassiere (1), comprising a pair of cups (2) and a rear fastening band (3), **characterized in that** said rear fastening band (3) comprises:
- two end pieces (4), each of which is attached to one of said cups (2); AND
- an intermediate piece (5) positioned between said end pieces (4) and which is attachable at its ends to said end pieces (4).

2. Brassiere (1) according to claim 1, wherein said intermediate piece (5) comprises at its ends fastening elements (6) complementary to fastening elements (7) of the end pieces.

3. Brassiere (1) according to claim 1, **characterized in that** the fastening elements (7) of the end pieces (4) are in the projection area of the user's arms below the underarms and therefore outside the user's back.

4. Brassiere (1) according to claim 1, wherein said intermediate piece (5) is elastic.

5. Brassiere (1) according to any one of the preceding claims, wherein the rear fastening band (3) also comprises an additional piece (8) attached to said intermediate piece (5).

6. Brassiere (1) according to claim 5, wherein said additional piece (8) is removably attached to said intermediate piece (5).

7. Brassiere (1) according to the preceding claims **characterized in that** the additional piece (8) consists of a fancy ornament.

8. Brassiere (1) according to the preceding claims, **characterized in that** the intermediate piece (5) placed between the end pieces (4) is provided with hooks (15) on which the straps (9) can be fastened.

9. Brassiere (1) according to the preceding claims, **characterized in that** the straps (9) are interchangeable and replaceable by straps with fancy ornaments that are overlapped on the back of the user.
